# EUROPEAN PATENT SPECIFICATION

(11) **EP 1 727 075 B1**
(45) Date of publication and mention of the grant of the patent: **10.08.2011**
(21) Application number: 06010631.7
(22) Date of filing: 24.05.2006
(51) Int. Cl.: G06K 15/02, G06K 17/00

(54) **Printing system, image forming apparatus and computer data carrier**
Drucksystem, Bildausgabegerät und Computerdatenträger
Système d'impression, dispositif de sortie d'images et porteur de données d'ordinateur.

(30) Priority: 27.05.2005 JP 2005155919
(43) Date of publication of application: 29.11.2006
(73) Proprietor: Ricoh Company, Ltd., Tokyo 143-8555 (JP)
(72) Inventor: Fukunishi, Shigeki, Ohta-ku Tokyo 143-8555 (JP)
(74) Representative: Schwabe, Hans-Georg

(56) References cited:
- EP-A2- 1 507 402
- US-A1- 2005 034 069
- US-B1- 6 807 634

## Description

### BACKGROUND OF THE INVENTION

### 1. Field of the Invention

The present invention generally relates to a technology for appending faint-background data in an image to enhance security of a document.

### 2. Description of the Related Art

There are image forming apparatuses that append faint-background data to printing data of an important document and then print faint-background-appended printing data to allow distinguishing between an original document from a copy of the document when copying an important document including a confidential document, such as a prescription, and a document having market value, such as a currency note. A conventional technology for the faint-background printing is disclosed in, for example, Japanese Patent Application Laid-Open No. 2005-006169, Japanese Patent Application Laid-Open No.2001-324898, and Japanese Patent Application Laid-Open No.2002-366693.

The faint-background data is generated by combining a copy-remain pattern that is optically readable after copying and a copy-delete pattern that is optically unreadable after copying. When a document including the faint-background data is copied on a copy medium, such as a paper, the copy-remain pattern becomes visible on the paper, so that it becomes obvious that it is a copy and not the original.

In some cases there is a need to identify a leakage source, which is an apparatus or a person from where a document has leaked, of a printed material than to distinguish whether a printed material is a copy or an original. For example, if an unexamined patent application or an undisclosed product-proposing document has leaked, it is important to identify the leakage source than to distinguish whether it is a copy or an original because the document has leaked anyway. Some conventional techniques disclose including a logon-user name, of a personal computer (PC) used for outputting the document, in the copy-remain pattern. According to those techniques, when such a document is printed, the logon-user name becomes visible on the printed material, so that the leakage source of printed material can be easily identified.

However, it is not very difficult to change a logon-user name of the PC, so that the technique of including the logon-user name in the copy-remain pattern is not that reliable. A person having the right of an administrator of the PC can easily change the logon-user name of the PC, or a person having the right of an administrator of a network can easily change logon-user names of PCs on the network.

US-2005/0034069 A discloses a method and an apparatus for generating copy-protected documents. Copy-protected documents are generated for intended recipients by integrating a document, each recipient name on a recipient list, and a security template into distinct copy-protected documents.

EP 1 507 402 A discloses an access control decision system. In the access control decision system, first information indicated by an access decision request is converted into second information being higher abstract when the access decision request is received. Next, the access control for the subject information is determined by referring a security policy being abstractly regulated based on the second information and a decision result showing the access control for the subject information is sent to a request originator that sent the access decision request.

US-6,807,634 B discloses a digital watermarking method. The digital watermarking method encodes different pairs of watermarks into each of a plurality of images offered for use by a vendor. The watermarks in each pair are derived from two separate collections of watermarks and sufficiently different so as to prevent false positives. Because each pair of watermarks is assigned to a different customer relative to a particular image, unauthorized use of a digital image sold to a customer may be determined by locating the associated pair of watermarks assigned to the customer in the image. Collusion detection is also realized by forming each pair of masks from sub-collections of masks which are detectable in an image formed by combining the same images sold to one or more customers.

### SUMMARY OF THE INVENTION

The invention is defined by the subject-matter of the independent claims. The dependent claims are directed to advantageous embodiments.

### ADVANTAGES OF THE INVENTION

Advantageously, a printing system includes an information processing apparatus that processes various types of data; and a printing apparatus connected to the information processing apparatus via a network. The information processing apparatus includes an input processing unit that receives information required to obtain an authentication from the printing apparatus; a faint-background generating unit that appends a part of the received information to a printing job as faint-background data including a copy-control pattern that appears on a copy of a document; and a job transferring unit that transfers the printing job to the printing apparatus. The printing apparatus includes a job control unit that receives the printing job including the faint-background data from the information processing apparatus; an authentication processing unit that performs an authentication process of determining whether printing of the received printing job is allowed. The job control unit executes the printing of the received printing job when an authentication is obtained with the authentication processing unit determining that the printing of the printing job is allowed.

Advantageously, a printing system includes an authentication processing unit that performs an authentication process of determining whether printing of a printing job is allowed; a job control unit that executes the printing of the printing job when an authentication is obtained with the authentication processing unit determining that the printing of the printing job is allowed; and a faint-background generating unit that appends, upon the job control unit executing the printing of the printing job, information on the authentication to the printing job as faint-background data including a copy-control pattern that appears on a copy of a document.

Advantageously, a computer-readable recording medium stores a computer for performing a printing process. The computer program causes a computer to execute performing an authentication process of determining whether printing of a printing job is allowed; executing the printing of the printing job when an authentication is obtained with the printing of the printing job determined to be allowed; and appending, when the printing of the printing job is executed, information on the authentication to the printing job as faint-background data including a copy-control pattern that appears on a copy of a document.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic for explaining a printing system including a printer according to a first embodiment of the present invention;
Fig. 2 is a block diagram for explaining a hardware structure of a computer terminal shown in Fig. 1;
Fig. 3 is a block diagram for explaining a software structure of the computer terminal;
Fig. 4 is a sequence diagram for explaining a processing sequence of controlling software shown in Fig. 3;
Fig. 5 is a flowchart for explaining a process performed by a job creating unit shown in Fig. 4;
Fig. 6 is a block diagram for explaining a hardware structure of a printer shown in Fig. 1;
Fig. 7 is a table of user information in hard disk device shown in Fig. 6;
Fig. 8 is a block diagram for explaining a software structure of the printer;
Fig. 9 is a sequence diagram for explaining a processing sequence of controlling software shown in Fig. 8;
Fig. 10 is a flowchart for explaining a process performed by a job control unit shown in Fig. 9;
Fig. 11 is a flowchart for explaining a process performed by an authentication processing unit shown in Fig. 9;
Fig. 12 is a block diagram for explaining another software structure of the computer terminal;
Fig. 13 is a sequence diagram for explaining a processing sequence of controlling software shown in Fig. 12;
Fig. 14 is a flowchart for explaining a process performed by a job creating unit shown in Fig. 13;
Fig. 15 is a block diagram for explaining another software structure of the printer;
Fig. 16 is a sequence diagram for explaining a processing sequence of controlling software shown in Fig. 15;
Fig. 17 is a flowchart for explaining a process performed by a job control unit shown in Fig. 16; and
Fig. 18 is a flowchart for explaining a process performed by a faint-background generating unit shown in Fig. 16.

### DETAILED DESCRIPTION OF THE PREFERRED EMBODIMENTS

Exemplary embodiments of the present invention are explained below in detail with reference to the accompanying drawings.

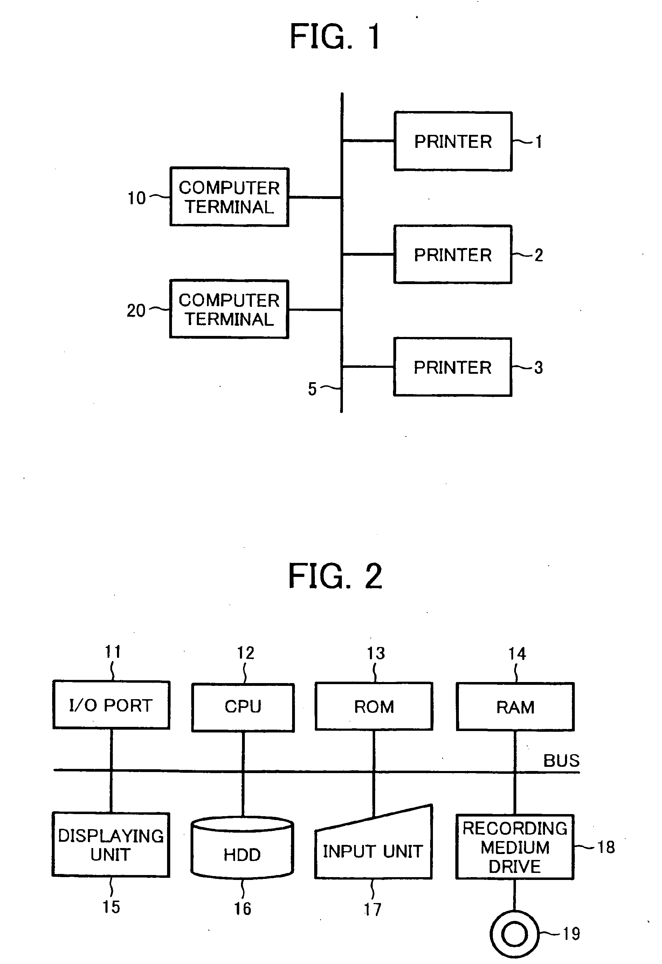

Fig. 1 is a schematic for explaining a printing system including a printer according to a first embodiment of the present invention.

The printing system according to the first embodiment includes computer terminals 10 and 20, printers 1 to 3, and a network 5. The computer terminals 10 and 20 are capable of connecting and communicating to the printers 1 to 3 via the network 5 and the network 5 is, for example, a local area network (LAN). Each of the computer terminals 10 and 20 selects any one of the printers 1 to 3 to transfer a printing job and print the printing job by using a printer driver in an application of the computer terminal 10 and 20.

The computer terminals 10 and 20 are generally information processing apparatuses (host apparatuses) such as a personal computer (PC), workstation, a client computer, or a print server. In a print server system, the client computer can be a web client, such as a web server or a web browser, of the print server (printing service).

The printers 1 to 3 are image forming apparatuses for printing a visible image on a paper by using a print data of the printing job transferred from the computer terminal 10 or 20. The image forming apparatus can be an apparatus having only a printing function such as a laser printer, a light emitting diode (LED) printer, or an ink jet printer. Alternately, the image forming apparatus can be an apparatus having not only the printing function but also a copying function, a print server function or the like, such as a digital copying machine, a digital integrated machine, or a facsimile apparatus.

Fig. 2 is a block diagram for explaining a hardware structure of the computer terminal 10. As the hardware structure of the computer terminal 20 is the same as the computer terminal 10, detail explanations of the computer terminal 20 will be omitted. The computer terminal 10 includes an input/output port (I/O port) 11, a central processing unit (CPU) 12, a read only memory (ROM) 13, a random access memory (RAM) 14, a displaying unit 15, a hard disk device (HDD) 16, an inputting unit 17, and a recording medium drive 18.

The I/O port 11 is a communication tool for relaying a communication between the computer terminal 10 and the printers 1 to 3 via the network 5. The CPU 12 centrally controls the computer terminal 10. The ROM 13 stores therein predetermined computer programs to be executed by the CPU 12. The RAM 14 is a readable and writeable memory to extract therein the predetermined computer programs, to be executed by the CPU 12, and be used as a work-area for various processing.

The displaying unit 15 can be a cathode-lay tube (CRT) display or a liquid crystal display (LCD) and displays various data or screens necessary for a printing operation. The HDD 16 is a high capacity memory and stores therein computer programs and various data including a copy-remain pattern and a copy-delete pattern. The inputting unit 17 can be a keyboard and/or a pointing device, such as a mouse, and is used by a user for inputting various data and/or commands including necessary information to perform authentication in any one printer to be used by the user.

The recording medium drive 18 is a recording and replaying unit that records data to and replays data from a recording medium 19. The recording medium 19 is a removable and computer-accessible device such as a magnetooptical (MO) disc, a compact disc-recordable (CD-R), a compact disc-rewritable (CD-RW), a digital versatile disc-recordable (DVD-R), a digital versatile disc-rewritable (DVD-RW), or a DVD-RAM and stores therein a control program (control software) to control printing. Alternately, the recording medium 19 can be built-in the body of the computer terminal 10.

When the user inputs a command from the inputting unit 17, the CPU 12 retrieves the control program from the recording medium 19 through the recording medium drive 18 and installs the control program into the HDD 16.

Then, when the computer terminal 10 is booted, the CPU 12 retrieves various computer programs, such as an operating system (OS), an application (application software), or a user interface, installed in the HDD 16 by using a boot loader (boot program) in the ROM 13 and installs the computer programs onto the RAM 14 to execute the computer programs. By performing the above process, it becomes possible to realize various functions corresponding to a faint-background generating unit according to the present invention.

The CPU 12 executes processing by using the control programs (control software); however, it is assumed here that the computer programs execute the processing. As the software structure and a printing processing of the computer terminal 20 is the same as the computer terminal 10, detail explanations of the computer terminal 20 will be omitted.

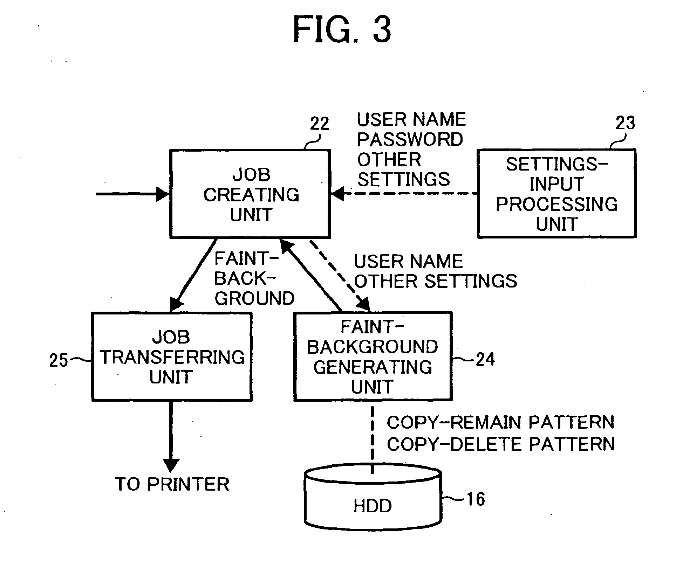

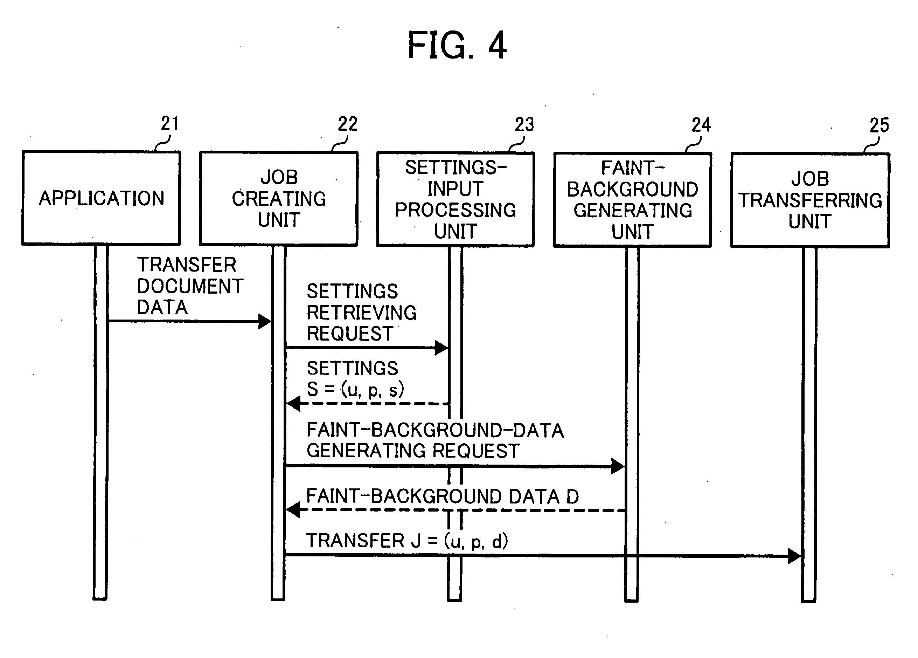

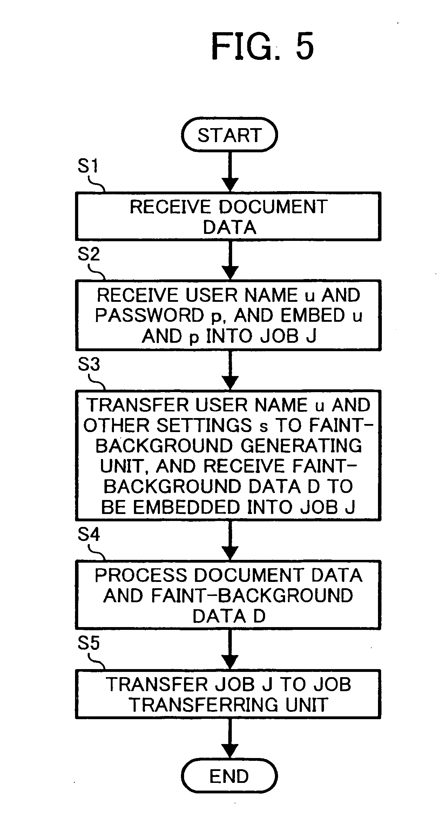

Fig. 3 is a block diagram for explaining a software structure of the computer terminal 10. An application 21 is not shown. The computer terminal 10 includes a plurality of controlling software corresponding to a job creating unit 22, a settings-input processing unit 23, a faint-background generating unit 24, a job transferring unit 25, and the HDD 16. Solid lines with arrows indicate job sequence and dashed lines with arrows indicate data flow. Fig. 4 is a sequence diagram for explaining a processing sequence of the controlling software shown in Fig. 3. Fig. 5 is a flowchart for explaining a process performed by the job creating unit 22 shown in Fig. 4.

The application 21 generates a print data (hereinafter, a document data) corresponding to a command input by the user from the inputting unit 17 on a screen of the displaying unit 15 and transfers the document data to the job creating unit 22. The document data is used as master data to print the original document.

The job creating unit 22 receives the document data from the application 21 and various settings from the settings-input processing unit 23. Then, by using the various settings, the job creating unit 22 processes the document data into a job data (printing job) that can be printed by a printer (hereinafter, printer 1).

Namely, when the document data is transferred from the application 21, the job creating unit 22 starts a processing sequence shown in Fig. 5 and receives the document data at step S1.

At step S2, the job creating unit 22 sends a settings retrieving request to the settings-input processing unit 23 and receives a user name u, a password p, and other settings (printing conditions) s from the settings-input processing unit 23.

If receiving the settings retrieving request from the job creating unit 22, the settings-input processing unit 23 accepts an input of the user name u, the password p, and the other settings s, which are set for the printing by the user from the inputting unit 17. If the settings S are input to the settings-input processing unit 23, the settings-input processing unit 23 transfers the settings S to the job creating unit 22. The settings S are necessary information to perform authentication in a printer to be used by the user.

At step S3, the job creating unit 22 sends a faint-background-data generating request together with the user name u and the other settings s to the faint-background generating unit 24 and receives a faint-background data D to embed the faint-background data D into a printing job J.

If receiving the faint-background-data generating request from the job creating unit 22, the faint-background generating unit 24 generates a pattern of a character string corresponding to the user name u by using a copy-remain pattern and a copy-delete pattern in the HDD 16. Then the generated pattern, including a copy-control pattern that appears on a copy, is embedded into the faint-background data D and the faint-background generating unit 24 transfers the faint-background data D to the job creating unit 22. It is assumed here that the user name u, which is included in the faint-background-data generating request and used for performing authentication, is rendered by the copy-remain pattern.

At step S4, the job creating unit 22 processes the document data received at step S1 and the faint-background data D generated at step S3 into a printing-allowed printing job d by referring to the other settings s and embeds the printing data d into the printing job J.

At step S5, the job creating unit 22 transfers the printing job J including the user name u, the password p, and the printing data d, to the job transferring unit 25.

If receiving the printing job J from the job creating unit 22, the job transferring unit 25 transfers the printing job J to any one of the printers 1 to 3 by using the I/O port 11.

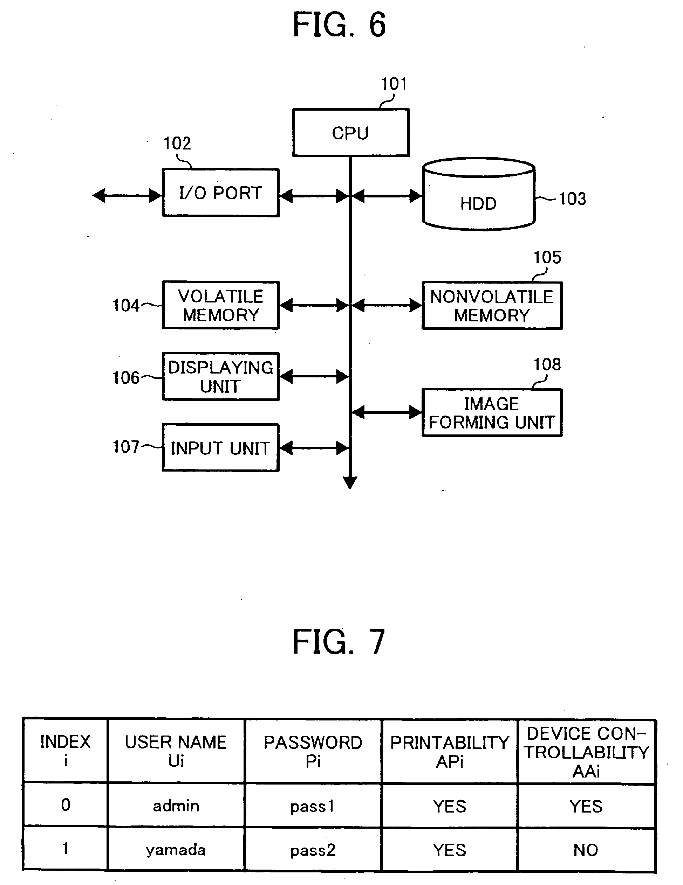

Fig. 6 is a block diagram for explaining a hardware structure of the printer 1. As the hardware structures of the printers 2 and 3 are the same as the printer 1, detail explanations of the printers 2 and 3 will be omitted. The printer 1 includes a CPU 101, an I/O port 102, an HDD 103, a volatile memory 104, a nonvolatile memory 105, a displaying unit 106, an inputting unit 107, and an image forming unit 108.

The CPU 101 centrally controls the printer 1. The I/O port 102 is a communication tool for receiving the printing job J from the computer terminals 10 and 20. The HDD 103 is a high capacity memory and stores therein various data including user information. The volatile memory 104 is a readable and writeable memory, such as a RAM, to be used as a work-area for various processing and used as an image-creating area for creating a bitmap image by using the printing job.

The nonvolatile memory 105 is a memory, such as a flash ROM, and stores the control program (control software) and various data including the copy-delete pattern and the copy-remain pattern.

The displaying unit 106 can be a cathode-lay tube (CRT) display or a liquid crystal display (LCD) and displays the status of the printer 1 or the user information. The inputting unit 107 is used by a user for inputting the user information or the like. The image forming unit 108 performs image forming processing to transcribe the bitmap image created by the CPU 101 onto a paper.

The CPU 101 selectively executes various programs in the nonvolatile memory 105 to realize various functions corresponding to an authentication processing unit and a job control unit.

Fig. 7 is a table of the user information in the HDD 103. The user information includes a plurality of predetermined indices i, user names Ui, passwords Pi, information of printability APi, and information of device controllability AAi. If the device controllability AAi belonging to a user is YES, the user can change the user information. Although the passwords are described in human-readable characters in Fig. 7, the passwords are generally encoded by using data encryption standard (DES) or other methods.

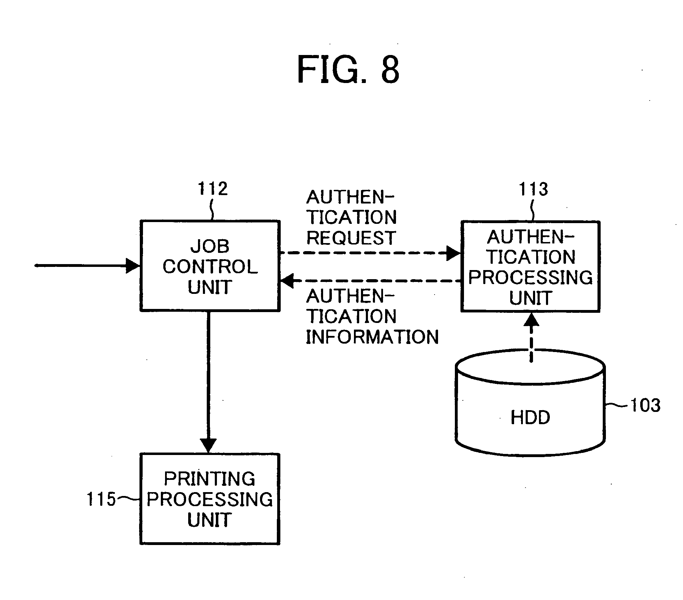

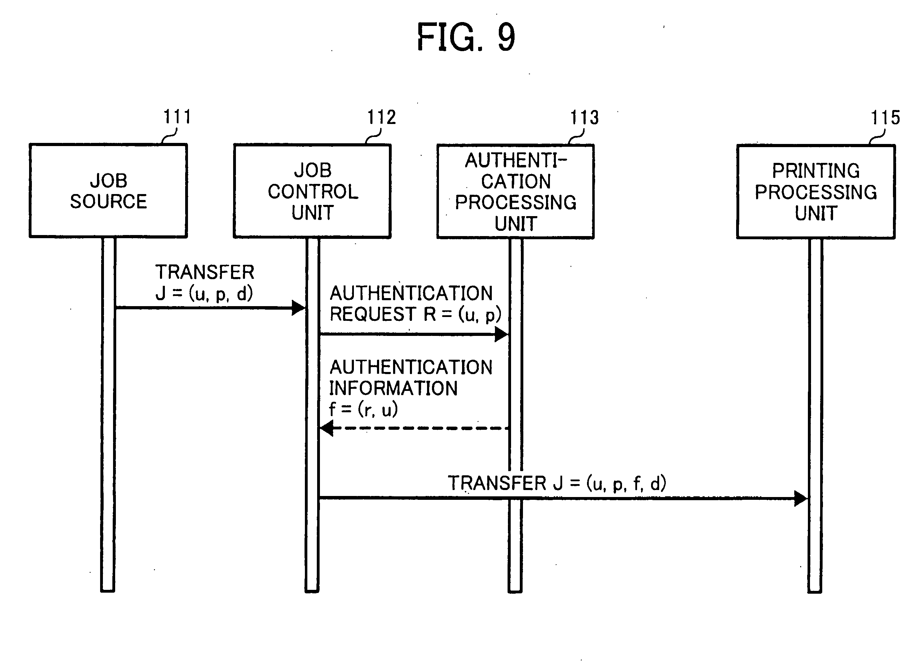

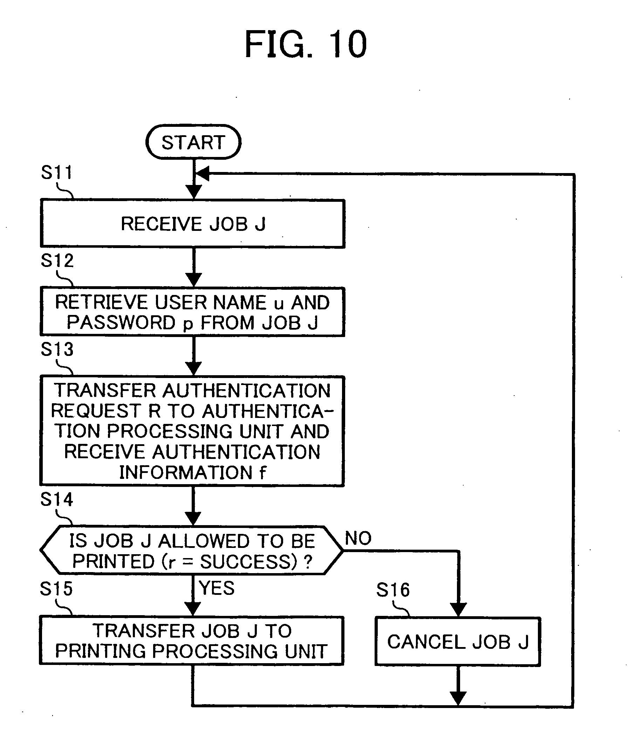

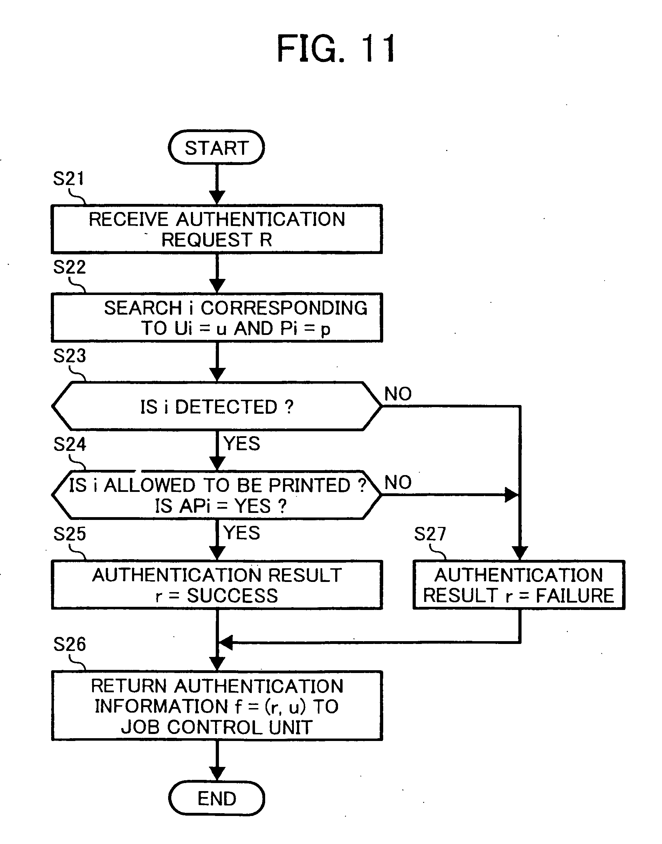

Fig. 8 is a block diagram for explaining a software structure of the printer 1. The printer 1 includes a plurality of controlling software corresponding to a job control unit 112, an authentication processing unit 113, and a printing processing unit 115. Solid lines with arrows indicate job sequence and dashed lines with arrows indicate data flow. Fig. 9 is a sequence diagram for explaining a processing sequence of the controlling software shown in Fig. 8. A job source 111 corresponds to the computer terminal 10 or 20. Fig. 10 is a flowchart for explaining a process performed by the job control unit 112. Fig. 11 is a flowchart for explaining a process performed by the authentication processing unit 113.

If the printing job J is transferred from the job source 111 (computer terminal 10 or 20), the job control unit 112 starts a processing sequence shown in Fig. 10 and receives the printing job J (user name u, password p, printing data d) from the job source 111 at step S11. At step S12, the job control unit 112 retrieves the user name u and the password p from the printing job J.

At step S13, the job control unit 112 sends an authentication request R including the user name u and the password p to the authentication processing unit 113 and receives authentication information f including authentication result r, which indicates authentication success or authentication failure, and the user name u from the authentication processing unit 113.

At step S14, the job control unit 112 verifies whether printing of the printing data d of the printing job J is allowed by referring to the authentication information f. If printing of the printing job d is determined to be allowed, the job control unit 112 embeds the authentication information f into the printing job J and transfers the printing job J to the printing processing unit 115 at step S15. If printing of the printing data d is determined not to be allowed, the job control unit 112 cancels the printing job J at step S16.

If the authentication request R including the user name u and the password p is transferred from the job control unit 112, the authentication processing unit 113 starts a processing sequence shown in Fig. 11 and receives the authentication request R at step S21. At step S22, the authentication processing unit 113 searches index i, which corresponds to a user name Ui and a password Pi. The user name Ui corresponds to the user name u and the password Pi corresponds to the password p as can be indicated as Ui=u and Pi=p.

At step S23, the authentication processing unit 113 verifies whether the index i is detected. If the index i corresponding to the user information is detected in the HDD 103, the authentication processing unit 113 verifies whether printing of the index i is allowed by referring to the corresponding printability information APi at step S24. If the printability information APi corresponding to the index i indicates that printing of the printing job is allowed, the authentication processing unit 113 sets the authentication result r as authentication success at step S25. If the index i corresponding to the user information is not detected in the HDD 103 or if the printability information APi corresponding to the index i indicates that printing of the printing job is not allowed, the authentication processing unit 113 sets the authentication result r as authentication failure at step S27. At step S26, the authentication processing unit 113 transfers the authentication information f including the authentication result r and the user name u, to the job control unit 112.

If the printing processing unit 115 receives the printing job J from the job control unit 112, the printing processing unit 115 begins a rendering of the printing job J to create the bitmap image, develops the bitmap image to the image-creating area in the volatile memory 104, and outputs the bitmap image to the image forming unit 108 to print the bitmap image on a paper.

According to the first embodiment, when the computer terminal (host apparatus) embeds the faint-background data including an copy-control pattern, which is generated from the copy-remain pattern and the copy-delete pattern, into the printing job (including the master data) and transfers the printing job to the printer, the computer terminal embeds a part of the predetermined information, which is used for performing authentication in the printer and rendered by the copy-remain pattern, into the printing job. When the printer receives the printing job from the computer terminal before performing the printing, it verifies whether printing of the printing job is allowed. If printing of the printing job is determined to be allowed, the printer prints the printing job (printing data) on a paper, so that when the paper is copied, the copy-remain pattern becomes visible on a copy. As a result, it becomes obvious that the printed material is a copy and not the original, and as the visualized copy-remain pattern includes the information input by the user, it becomes possible to identify the user who output the original.

Furthermore, according to the first embodiment, the printer determines that printing of the printing job is allowed and performs the printing only when any received information corresponds to the predetermined information, such as the user name and the password. Therefore, it becomes possible to enhance the security.

Moreover, according to the first embodiment, when the computer terminal embeds the faint-background data into the printing job and transfers the printing job to the printer, any patterns rendered by the copy-remain pattern can be embedded and the input information rendered by the copy-delete pattern can also be embedded into the printing job. As the copy-remain pattern and the copy-delete pattern are combined and to be printed on a paper, the input information becomes visible on a copy when the paper is copied.

In a second embodiment of the present invention, hardware structures of the printing system, the computer terminal 10 and 20, and the printers 1 to 3 are the same as the first embodiment as shown in Figs. 1, 2, and 6. It is unique in the second embodiment that the CPU 101 in the printers 1 to 3 executes processing by using a control program in the nonvolatile memory 105 to realize functions corresponding to a faint-background generating unit 114.

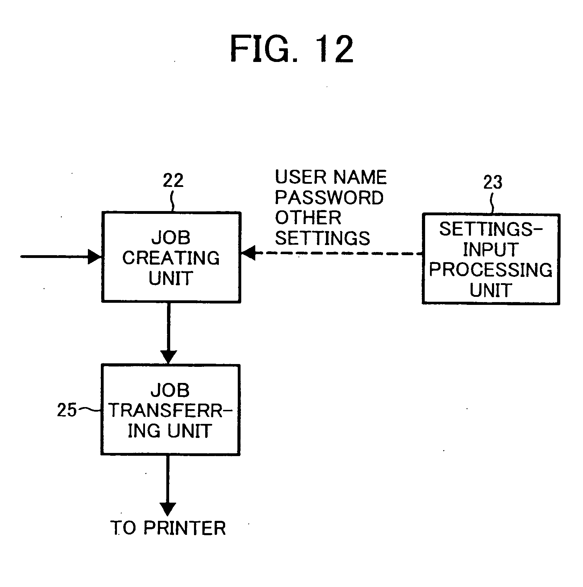

Fig. 12 is a block diagram for explaining another software structure of the computer terminal 10. The computer terminal 10 includes a plurality of controlling software corresponding to the job creating unit 22, the settings-input processing unit 23, and the job transferring unit 25. The application 21 is not shown. Solid lines with arrows indicate job sequence and dashed lines with arrows indicate data flow.

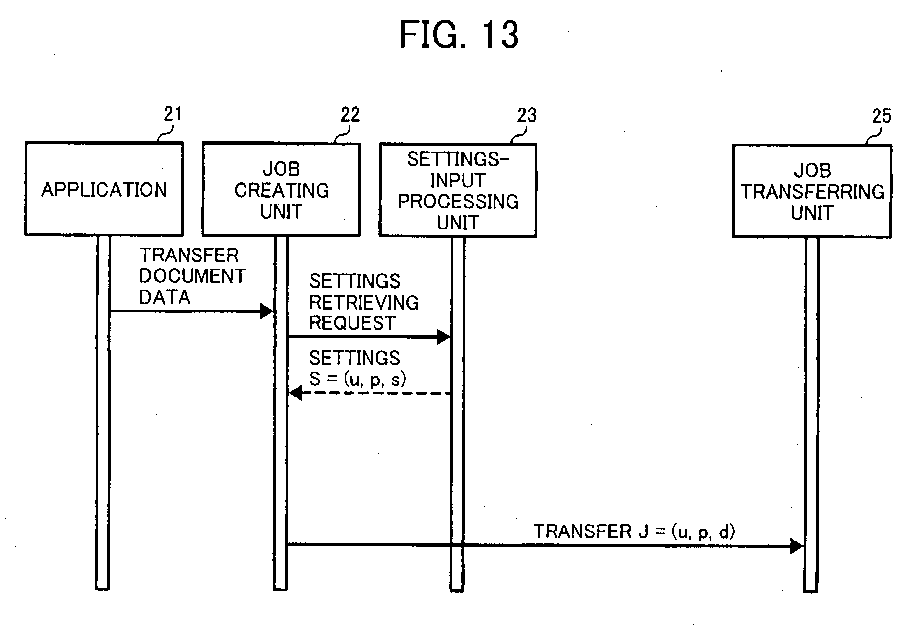

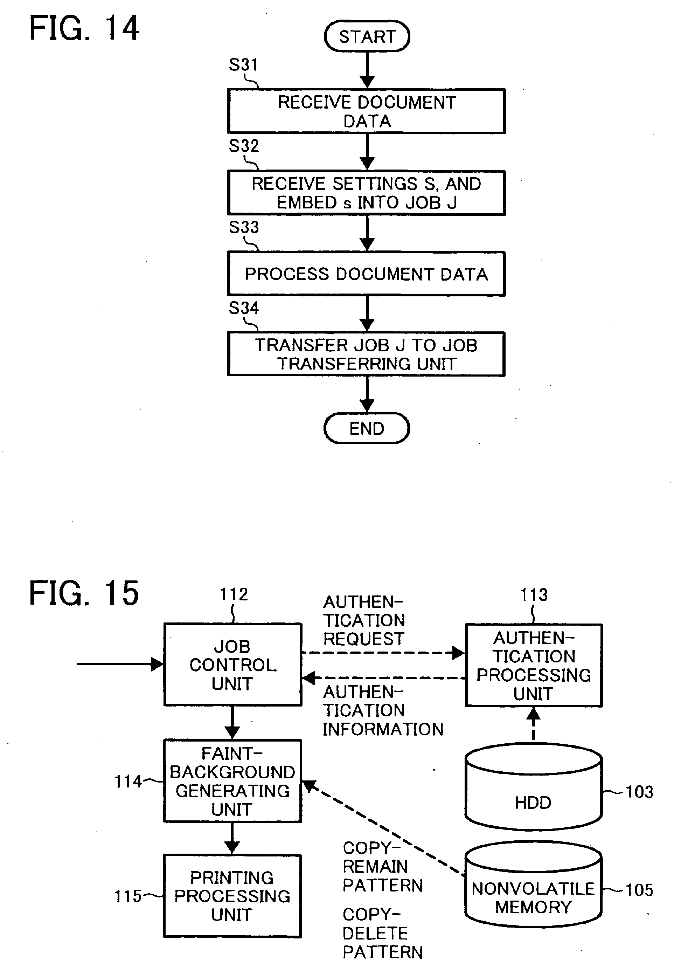

Fig. 13 is a sequence diagram for explaining a processing sequence of the controlling software shown in Fig. 12. Fig. 14 is a flowchart for explaining a process performed by the job creating unit 22 shown in Fig. 13.

The application 21 generates a print data (hereinafter, a document data) corresponding to a command input from the inputting unit 17 on the displaying unit 15 and transfers the document data to the job creating unit 22. The document data is used as master data to print the original document.

The job creating unit 22 receives the document data from the application 21 and various settings from the settings-input processing unit 23. Then, by using the various settings, the job creating unit 22 processes the document data into a printing job (printing data) that can be printed by a printer (hereinafter, printer 1).

Namely, when the document data is transferred from the application 21, the job creating unit 22 starts a processing sequence shown in Fig. 14 and receives the document data at step S31.

At step S32, the job creating unit 22 sends the settings retrieving request to the settings-input processing unit 23 and receives a settings S from the settings-input processing unit 23 and embeds the user name u and the password p to the printing job J.

If receiving the settings retrieving request from the job creating unit 22, the settings-input processing unit 23 accepts an input of the user name u, the password p, and the other settings s from the user by using the inputting unit 17. If the settings S are input to the settings-input processing unit 23, the settings-input processing unit 23 transfers the settings S to the job creating unit 22. The settings S are necessary information to perform authentication in a printer to be used by the user.

At step S33, the job creating unit 22 processes the document data received at step S31 into a printing-allowed printing data d by referring to the other settings s and embeds the printing data d to the printing job J.

At step S34, the job creating unit 22 transfers the printing job J including the user name u, the password p, and the printing data d, to the job transferring unit 25.

If receiving the printing job J from the job creating unit 22, the job transferring unit 25 transfers the printing job J to the printer 1 by using the I/O port 11.

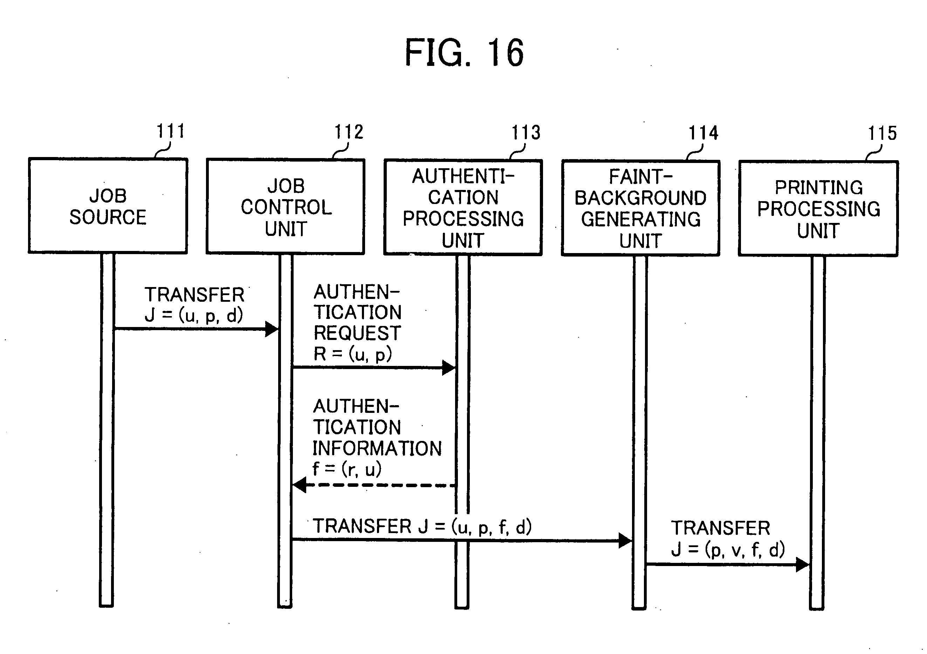

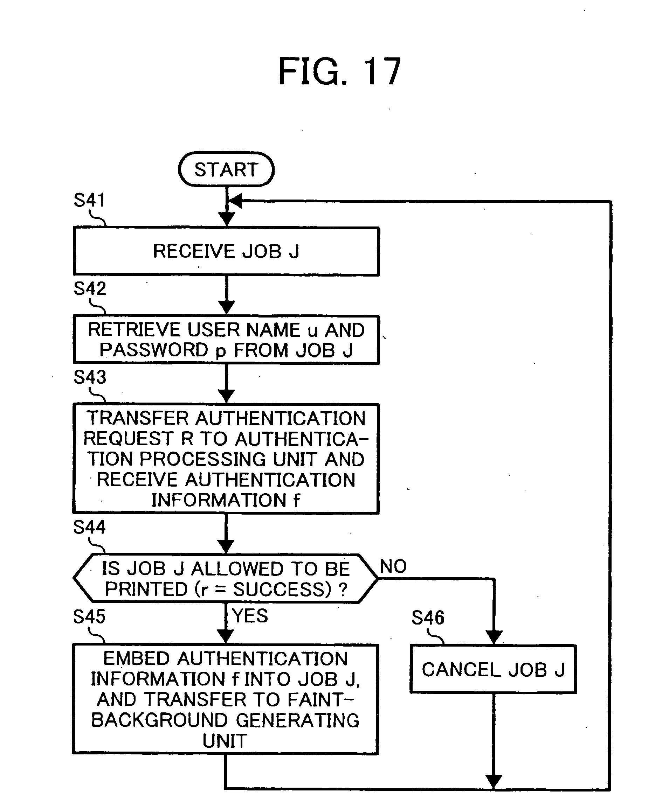

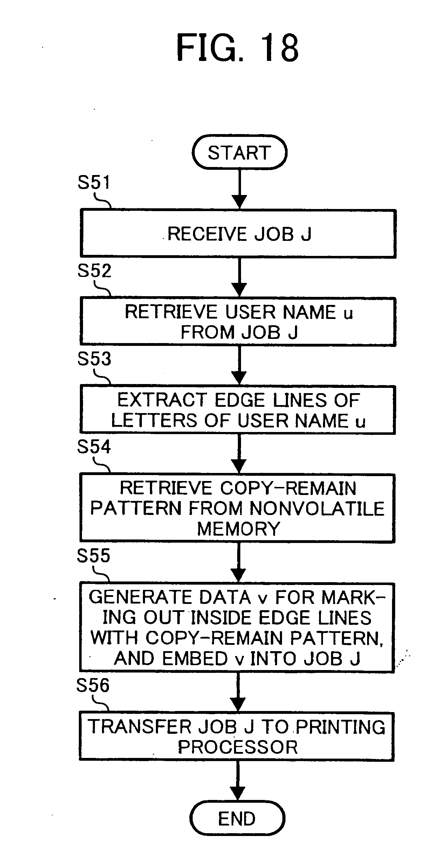

Fig. 15 is a block diagram for explaining another software structure of the printer 1. The printer 1 includes a plurality of controlling software corresponding to the job control unit 112, the authentication processing unit 113, the faint background generation unit 114, the printing processing unit 115, the HDD 103, and the nonvolatile memory 105. Solid lines with arrows indicate job sequence and dashed lines with arrows indicate data flow. Fig. 16 is a sequence diagram for explaining a processing sequence of the controlling software shown in Fig. 15. The job source 111 corresponds to the computer terminal 10 or 20. Fig. 17 is a flowchart for explaining a process performed by the job control unit 112. Fig. 18 is a flowchart for explaining a process performed by the faint-background generating unit 114.

If the printing job J is transferred from the job source 111, the job control unit 112 starts a processing sequence shown in Fig. 17 and receives the printing job J (user name u, password p, and printing data d) from the job source 111 at step S41. At step S42, the job control unit 112 retrieves the user name u and the password p from the printing job J.

At step S43, the job control unit 112 sends an authentication request R including the user name u and the password p to the authentication processing unit 113 and receives authentication information f including authentication result r, which indicates authentication success or authentication failure, and the user name u from the authenticating processing unit 113.

At step S44, the job control unit 112 verifies whether printing of the printing data d of the printing job J is allowed by referring to the authentication information f. If printing of the printing data d is determined to be allowed, the job control unit 112 embeds the authentication information f into the printing job J and transfers the printing job J to the faint-background generating unit 114 at step S45. If printing of the printing data d is determined not to be allowed, the job control unit 112 cancels the printing job J at step S46.

If the authentication request R including the user name u and the password p is transferred from the job control unit 112, the authentication processing unit 113 starts the processing sequence shown in Fig. 11.

If receiving the printing job J including the user name u, the password p, the authentication information f, and the printing data d from the job control unit 112, the faint-background generating unit 114 starts a processing sequence shown in Fig. 18 and receives the printing job J at step S51. At step S52, the faint-background generating unit 114 retrieves the user name u from the printing job J. At step S53, the faint-background generating unit 114 extracts border lines of letters of the user name u.

At step S54, the faint-background generating unit 114 retrieves the copy-remain pattern from the nonvolatile memory 105. At step S55, the faint-background generating unit 114 generates data v to be used for marking out the letters of the user name u framed by the border lines with the retrieved copy-remain pattern and embeds the data v into the printing job J. At step S56, the faint-background generating unit 114 transfers the printing job J to the printing processing unit 115.

If receiving the printing job J from the faint-background generating unit 114, the printing processing unit 115 begins a rendering of the printing job J to create the bitmap image, develops the bitmap image to the image-creating area in the volatile memory 104, outputs the bitmap image to the image forming unit 108 to print the bitmap image on a paper, and marks out the letters of the user name u framed by the border lines with the copy-remain pattern.

According to the second embodiment, when the printer embeds the faint-background data including a copy-control pattern, which is generated from the copy-remain pattern and the copy-delete pattern, into the printing job and performs the printing, the printer verifies whether printing of the printing job is allowed. If printing of the printing job is determined to be allowed and when the printer prints the printing job (printing data) on a paper, the printer embeds the copy-remain pattern including the authentication information, such as the user name, into the printing job so that the authentication information becomes visible on a copy when the paper is copied. As a result, it becomes obvious that the paper is not the original and it becomes possible to identify the user who output the original.

Furthermore, according to the second embodiment, the printer verifies that printing of the printing job is determined to be allowed when any received information matches with the predetermined information, such as the user name and the password, and uses the user name to perform authentication. Therefore, it becomes possible to enhance the security.

Moreover, according to the second embodiment, when the printer prints the printing job, any patterns rendered by the copy-remain pattern can be embedded and the input information rendered by the copy-delete pattern can also be embedded into the printing job. As the copy-remain pattern and the copy-delete pattern are combined and to be printed on a paper, the input information becomes visible on a copy when the paper is copied.

The present invention is not limited to the above explained embodiments and can be applied to various image forming apparatuses such as a printer that can print the faint-background data, a digital copying machine, or a facsimile apparatus, and various printing systems including the image forming apparatuses and the computer terminals.

A computer program according to an embodiment of the present invention is a program that enables the CPU to perform various functions, for example, corresponding to the authentication processing unit, the job control unit, the faint-background generating unit to realize the above explained effects.

The computer program can be pre-stored in a ROM or a HDD, or alternately, can be stored in the nonvolatile memory such as a CD-ROM, a flexible disk (FD), a static random access memory (SRAM), an electronically erasable and programmable read only memory (EEPROM), or a memory. The pre-stored computer program can be executed by the computer terminal, or alternately, the computer program stored in the nonvolatile memory can be extracted by the computer terminal to execute the computer program, perform the processing, and realize the functions explained above.

Further, the computer program can be downloaded from an external device that includes a recording medium storing the computer program therein or an external device having the computer program therein via a network.

Although the invention has been described with respect to a specific embodiment for a complete and clear disclosure, the invention may not to be thus limited but are to be construed as embodying all modifications and alternative constructions that may occur to one skilled in the art that fairly fall within the basic teaching herein set forth. The invention is defined by the following claims.

## Claims

1. A printing system comprising:
an authentication processing unit (113) configured to perform an authentication process of determining whether printing of a printing job is allowed;
**characterized in that**:
the authentication process is based on user-related information inputted by a user; and
the printing system further comprising:
a job control unit (112) configured to transfer the printing job to a printing processing unit (115) configured to execute the printing of the printing job, when an authentication is obtained with the authentication processing unit (113) determining that the printing of the printing job is allowed; and
a faint-background generating unit (24; 114) configured to append information on the authentication to the printing job as faint-background data including a copy-control pattern that appears on a copy of a document,
wherein the information on the authentication appended to the printing job includes the user-related information inputted by the user,
wherein the copy-control pattern is generated by combining a copy-remain pattern and a copy-delete pattern,
wherein the copy-remain pattern is optically readable at a time of copying the document,
wherein the copy-delete pattern is optically unreadable at a time of copying the document;
wherein the printing system comprises a memory (103) configured to store predetermined user-related inforrnation,
wherein the authentication processing unit (113) is further configured to determine whether or not the user-related information retrieved from the printing job is stored in the memory (103).
the printing system being adapted to, when the user-related information retrieved from the printing job is stored in the memory (103), execute the printing job and, when the user-related information retrieved from the printing job is not stored in the memory (103), cancel the printing job.

2. The system according to claim 1, further comprising:
an information processing apparatus (10, 20; 111) configured to process various types of data; and
a printing apparatus (1 to 3) connected to the information processing apparatus (10, 20; 111) via a network (5),
wherein:
the information processing apparatus (10, 20; 111) includes:
an input processing unit (23) configured to receive information required to obtain an authentication from the printing apparatus (1 to 3);
the faint-background generating unit (24; 114), wherein the appended information is a part of the received information; and
a job transferring unit (25) adapted to transfer the printing job to the printing apparatus (1 to 3), and
the printing apparatus (1 to 3) includes:
the job control unit (112) further configured to receive the printing job including the faint-background data from the information processing apparatus (10, 20; 111); and
the authentication processing unit (113) configured to perform an authentication process of determining whether printing of the received printing job is allowed
wherein the job control unit (112) is further configured to transfer the received printing job to the printing processing unit (115) configured to execute the printing of the received printing job when an authentication is obtained with the authentication processing unit (113) determining that the printing of the received printing job is allowed.

3. The system according to claim 2, wherein
the authentication processing unit (113) is further configured to determine that the printing of the printing job is allowed when the received information is identical with pre-registered information.

4. The system according to claim 2, wherein
the pre-registered information includes a user name and a password .

5. The system according to claim 1, wherein
the authentication processing unit (113) is further configured to determine that the printing of the printing job is allowed when information identical with pre-registered information is input, and
the faint-background generating unit (114) is further configured to use information with which the authentication is obtained with the authentication processing unit (113) determining that the printing of the printing job is allowed, as the information on the authentication.

6. The system according to claim 1, wherein
the pre-registered information includes a user name and a password and
the faint-background generating unit (114) is further configured to use a user name with which the authentication is obtained with the authentication processing unit (113) determining that the printing of the printing job is allowed, as the information on the authentication.

7. A method for performing a printing process, comprising the following steps:
performing an authentication process of determining whether printing of a printing job by a printer (1,2,3) is allowed;
**characterized by**:
the authentication process is based on user-related information inputted by a user;
executing the printing of the printing job when an authentication is obtained with the printing of the printing job determined to be allowed;
appending information on the authentication to the printing job as faint-background data including a copy-control pattern that appears on a copy of a document wherein the copy-control pattern is generated by combining a copy-remain pattern and a copy-delete pattern,
wherein the information on the authentication appended to the printing job includes the user-related information inputted by the user,
wherein the copy-remain pattern is optically readable at a time of copying the document, and
wherein the copy-delete pattern is optically unreadable at a time of copying the document;
storing predetermined user-related information; and
determining whether or not the user-related information (u, p) retrieved from the printing job is stored in the printer (1,2,3);
wherein when the user-related information retrieved from the printing job is stored in the memory (103) the printing job is executed and when the user-related information retrieved from the printing job is not stored in the memory (103) the printing job is canceled.

8. The method according to claim 7, wherein
the performing includes determining that the printing of the printing job is allowed when information identical with pre-registered information is input, and
the appending includes using information with which the authentication is obtained with the printing of the printing job determined to be allowed, as the information on the authentication.

9. The method according to claim 8, wherein
the pre-registered information includes a user name and a password, and
the appending includes using a user name with which the authentication is obtained with the printing of the printing job determined to be allowed, as the information on the authentication.

10. A computer-readable recording medium that stores a computer program for performing a printing process, wherein the computer program causes a computer to execute all of the steps of any one of claims 7 to 9, wherein the printing of the printing job is performed by a printing processing unit (115) connected to the computer.

## Patentansprüche

1. Drucksystem, das umfasst:
eine Authentifizierungs-Verarbeitungseinheit (113), die konfiguriert ist, um einen Authentifizierungsprozess des Bestimmens, ob das Drucken eines Druckauftrags erlaubt ist, auszuführen;
**dadurch gekennzeichnet, dass**:
der Authentifizierungsprozess auf benutzerbezogenen Informationen basiert, die durch einen Benutzer eingegeben werden; und
das Drucksystem ferner umfasst:
eine Auftrags-Steuereinheit (112), die konfiguriert ist, um den Druckauftrag zu einer Druckverarbeitungseinheit (115), die konfiguriert ist, um das Drucken des Druckauftrages auszuführen, zu übertragen, wenn von der Authentifizierungs-Verarbeitungseinheit (113), die bestimmt, dass das Drucken des Druckauftrags erlaubt ist, eine Authentifizierung erhalten wird; und
eine Erzeugungseinheit (24; 114) für einen schwachen Hintergrund, die konfiguriert ist, um Informationen zu der Authentifizierung für den Druckauftrag als Daten eines schwachen Hintergrunds, die ein Kopiersteuermuster enthalten, das auf einer Kopie eines Dokuments erscheint, hinzuzufügen,
wobei die Informationen über die Authentifizierung, die zu dem Druckauftrag hinzugefügt werden, die durch den Benutzer eingegebenen benutzerbezogenen Informationen enthalten,
wobei das Kopiersteuermuster durch das Kombinieren eines auf der Kopie verbleibenden Musters und eines aus der Kopie gelöschten Musters erzeugt wird,
wobei das auf der Kopie verbleibende Muster zu einem Zeitpunkt des Kopierens des Dokuments optisch lesbar ist,
wobei das aus der Kopie gelöschte Muster zu einem Zeitpunkt des Kopierens des Dokuments optisch unlesbar ist,
wobei das Drucksystem einen Speicher (103) umfasst, der konfiguriert ist, um vorgegebene benutzerbezogene Informationen zu speichern,
wobei die Authentifizierungs-Verarbeitungseinheit (113) ferner konfiguriert ist, um zu bestimmen, ob die aus dem Druckauftrag wiedergewonnenen benutzerbezogenen Informationen in dem Speicher (103) gespeichert sind,
wobei das Drucksystem beschaffen ist, um, wenn die aus dem Druckauftrag wiedergewonnenen benutzerbezogenen Informationen in dem Speicher (103) gespeichert sind, den Druckauftrag auszuführen, und, wenn die aus dem Druckauftrag wiedergewonnenen benutzerbezogenen nicht in dem Speicher (103) gespeichert sind, den Druckauftrag zu löschen.

2. System nach Anspruch 1, das ferner umfasst:
eine Informationsverarbeitungsvorrichtung (10, 20; 111), die konfiguriert ist, um verschiedene Datentypen zu verarbeiten; und
eine Druckvorrichtung (1 bis 3), die über ein Netz (5) mit der Informationsverarbeitungsvorrichtung (10, 20; 111) verbunden ist,
wobei:
die Informationsverarbeitungsvorrichtung (10, 20, 111) enthält:
eine Eingabeverarbeitungseinheit (23), die konfiguriert ist, um die Informationen, die erforderlich sind, um eine Authentifizierung zu erhalten, von der Druckvorrichtung (1 bis 3) zu empfangen;
eine Erzeugungseinheit (24; 114) für einen schwachen Hintergrund, wobei die hinzugefügten Informationen ein Teil der empfangenen Informationen sind; und
eine Auftragsübertragungseinheit (25), die beschaffen ist, um den Druckauftrag zu der Druckvorrichtung (1 bis 3) zu übertragen, wobei
die Druckvorrichtung (1 bis 3) enthält:
die Auftragssteuereinheit (112), die ferner konfiguriert ist, um den Druckauftrag, der die Daten des schwachen Hintergrunds enthält, von der Informationsverarbeitungsvorrichtung (10, 20; 111) zu empfangen; und
die Authentifizierungs-Verarbeitungseinheit (113), die konfiguriert ist, um einen Authentifizierungsprozess des Bestimmens, ob das Drucken des empfangenen Druckauftrags erlaubt ist, auszuführen;
wobei die Auftragssteuereinheit (112) ferner konfiguriert ist, um den empfangenen Druckauftrag zu der Druckverarbeitungseinheit (115), die konfiguriert ist, um das Drucken des empfangenen Druckauftrages auszuführen, zu übertragen, wenn von der Authentifizierungs-Verarbeitungseinheit (113), die bestimmt, dass der empfangene Druckauftrag erlaubt ist, eine Authentifizierung erhalten wird.

3. System nach Anspruch 2, wobei
die Authentifizierungs-Verarbeitungseinheit (113) ferner konfiguriert ist, um zu bestimmen, dass das Drucken des Druckauftrages erlaubt ist, wenn die empfangenen Informationen mit den im Voraus registrierten Informationen völlig gleich sind.

4. System nach Anspruch 2, wobei
die im Voraus registrierten Informationen einen Benutzernamen und ein Kennwort enthalten.

5. System nach Anspruch 1, wobei
die Authentifizierungs-Verarbeitungseinheit (113) ferner konfiguriert ist, um zu bestimmen, dass das Drucken des Druckauftrages erlaubt ist, wenn die Informationen, die mit den im Voraus registrierten Informationen völlig gleich sind, eingegeben werden, und
die Erzeugungseinheit (114) für einen schwachen Hintergrund ferner konfiguriert ist, um die Informationen, mit denen die Authentifizierung von der Authentifizierungs-Verarbeitungseinheit (113), die bestimmt, dass das Drucken des Druckauftrages erlaubt ist, erhalten wird, als die Informationen über die Authentifizierung zu verwenden.

6. System nach Anspruch 1, wobei
die im Voraus registrierten Informationen einen Benutzernamen und ein Kennwort enthalten, und
die Erzeugungseinheit (114) für einen schwachen Hintergrund ferner konfiguriert ist, um einen Benutzernamen, mit dem die Authentifizierung von der Authentifizierungs-Verarbeitungseinheit (113), die bestimmt, dass das Drucken des Druckauftrages erlaubt ist, erhalten wird, als die Informationen über die Authentifizierung zu verwenden.

7. Verfahren zum Ausführen eines Druckprozesses, das die folgenden Schritte umfasst:
Ausführen eines Authentifizierungsprozesses des Bestimmens, ob das Drucken eines Druckauftrags durch einen Drucker (1, 2, 3) erlaubt ist;
**dadurch gekennzeichnet, dass**
der Authentifizierungsprozess auf den durch einen Benutzer eingegebenen benutzerbezogenen Informationen basiert;
Ausführen des Druckens des Druckauftrages, wenn die Authentifizierung erhalten wird, wobei bestimmt wird, dass das Drucken des Druckauftrages erlaubt ist;
Hinzufügen von Informationen zu der Authentifizierung für den Druckauftrag als Daten eines schwachen Hintergrunds, die ein Kopiersteuermuster enthalten, das auf einer Kopie eines Dokuments erscheint, wobei das Kopiersteuermuster durch das Kombinieren eines auf der Kopie verbleibenden Musters und eines aus der Kopie gelöschten Musters erzeugt wird,
wobei die Informationen über die Authentifizierung, die zu dem Druckauftrag hinzugefügt werden, die durch den Benutzer eingegebenen benutzerbezogenen Informationen enthalten,
wobei das auf der Kopie verbleibende Muster zu einem Zeitpunkt des Kopierens des Dokuments optisch lesbar ist, und
wobei das aus der Kopie gelöschte Muster zu einem Zeitpunkt des Kopierens des Dokuments optisch unlesbar ist,
Speichern der vorgegebenen benutzerbezogenen Informationen; und
Bestimmen, ob die aus dem Druckauftrag wiedergewonnenen benutzerbezogenen Informationen (u, p) in dem Drucker (1, 2, 3) gespeichert sind;
wobei, wenn die aus dem Druckauftrag wiedergewonnenen benutzerbezogenen Informationen in dem Speicher (103) gespeichert sind, der Druckauftrag ausgeführt wird, und wenn die aus dem Druckauftrag wiedergewonnenen benutzerbezogenen Informationen nicht in dem Speicher (103) gespeichert sind, der Druckauftrag gelöscht wird.

8. Verfahren nach Anspruch 7, wobei
das Ausführen das Bestimmen umfasst, dass das Drucken des Druckauftrages erlaubt ist, wenn die Informationen, die mit den voraus registrierten Informationen völlig gleich sind, eingegeben werden, und
das Hinzufügen das Verwenden der Informationen, mit denen die Authentifizierung für das Drucken des Druckauftrages, der als erlaubt bestimmt wird, erhalten wird, als die Informationen über die Authentifizierung umfasst.

9. Verfahren nach Anspruch 8, wobei
die im Voraus registrierten Informationen einen Benutzernamen und ein Kennwort enthalten, und
das Hinzufügen das Verwenden eines Benutzernamens, mit dem die Authentifizierung für das Drucken des Druckauftrages, der als erlaubt bestimmt wird, erhalten wird, als die Informationen über die Authentifizierung enthält.

10. Computerlesbares Aufzeichnungsmedium, das ein Computer-Programm zum Ausführen eines Druckprozesses speichert, wobei das Computer-Programm einen Computer veranlasst, alle Schritte nach einem der Ansprüche 7 bis 9 auszuführen, wobei das Drucken des Druckauftrages durch eine Druckverarbeitungseinheit (115) ausgeführt wird, die mit dem Computer verbunden ist.

## Revendications

1. Système d'impression comportant :
une unité de traitement d'authentification (113) configurée pour effectuer un processus d'authentification pour déterminer si l'impression d'un travail d'impression est autorisée ;
**caractérisé en ce que** :
le processus d'authentification est basé sur une information ayant trait à un utilisateur entrée par un utilisateur ; et
le système d'impression comporte en outre :
une unité de contrôle de travail (112) configurée pour transférer le travail d'impression à une unité de traitement d'impression (115) configurée pour exécuter l'impression du travail d'impression, lorsqu'une authentification est obtenue par l'unité de traitement d'authentification (113) déterminant que l'impression du travail d'impression est autorisée ; et
une unité de génération de faible arrière-plan (24 ; 114) configurée pour joindre une information concernant l'authentification au travail d'impression en tant que données de faible arrière-plan comprenant un motif de contrôle de copie qui apparaît sur une copie d'un document,
dans lequel l'information concernant l'authentification jointe au travail d'impression comprend l'information ayant trait à l'utilisateur entrée par l'utilisateur,
dans lequel le motif de contrôle de copie est généré en combinant un motif de sauvegarde de copie et un motif de suppression de copie,
dans lequel le motif de sauvegarde de copie peut être lu optiquement au moment de la copie du document,
dans lequel le motif de suppression de copie ne peut pas être lu optiquement au moment de la copie du document ;
dans lequel le système d'impression comporte une mémoire (103) configurée pour mémoriser une information prédéterminée ayant trait à l'utilisateur,
dans lequel l'unité de traitement d'authentification (113) est en outre configurée pour déterminer si oui ou non l'information ayant trait à l'utilisateur récupérée depuis le travail d'impression est mémorisée dans la mémoire (103),
le système d'impression étant adapté à, lorsque l'information ayant trait à l'utilisateur récupérée à partir du travail d'impression est mémorisée dans la mémoire (103), exécuter le travail d'impression et, lorsque l'information ayant trait à l'utilisateur récupérée à partir du travail d'impression n'est pas mémorisée dans la mémoire (103), annuler le travail d'impression.

2. Système selon la revendication 1, comportant en outre :
un appareil de traitement d'information (10, 20 ; 111) configuré pour traiter différents types de données ; et
un appareil d'impression (1 à 3) relié à l'appareil de traitement d'information (10, 20 ; 111) par l'intermédiaire d'un réseau (5),
dans lequel :
l'appareil de traitement d'information (10, 20 ; 111) comprend :
une unité de traitement d'entrée (23) configurée pour recevoir une information requise pour obtenir une authentification depuis l'appareil d'impression (1 à 3) ;
une unité de génération de faible arrière-plan (24 ; 114), dans laquelle l'information jointe est une partie de l'information reçue ; et
une unité de transfert de travail (25) adaptée pour transférer le travail d'impression à l'appareil de d'impression (1 à 3), et
l'appareil d'impression (1 à 3) comprend :
l'unité de contrôle de travail (112) configurée en outre pour recevoir le travail d'impression comprenant les données de faible arrière-plan depuis l'appareil de traitement d'information (10, 20 ; 111) ; et
l'unité de traitement d'authentification (113) configurée pour effectuer un processus d'authentification pour déterminer si l'impression du travail d'impression reçue est autorisée,
dans lequel l'unité de contrôle de travail (112) est en outre configurée pour transférer le travail d'impression reçu à l'unité de traitement d'impression (115) configurée pour exécuter l'impression du travail d'impression reçu lorsqu'une authentification est obtenue par l'unité de traitement d'authentification (113) déterminant que l'impression du travail d'impression reçu est autorisée.

3. Système selon la revendication 2, dans lequel
l'unité de traitement d'authentification (113) est en outre configurée pour déterminer que l'impression du travail d'impression est autorisée lorsque l'information est identique à une information préenregistrée.

4. Système selon la revendication 2, dans lequel
l'information préenregistrée comprend un nom d'utilisateur et un mot de passe.

5. Système selon la revendication 1, dans lequel
l'unité de traitement d'authentification (113) est en outre configurée pour déterminer que l'impression du travail d'impression est autorisée lorsque une information identique à l'information préenregistrée est entrée, et
l'unité de génération de faible arrière-plan (114) est en outre configurée pour utiliser une information avec laquelle l'authentification est obtenue par l'unité de traitement d'authentification (113) déterminant que l'impression du travail d'impression est autorisée, en tant qu'information concernant l'authentification.

6. Système selon la revendication 1, dans lequel
l'information préenregistrée comprend un nom d'utilisateur et un mot de passe, et
l'unité de génération de faible arrière-plan (114) est en outre configurée pour utiliser un nom d'utilisateur avec lequel l'authentification est obtenue grâce à l'unité de traitement d'authentification (113) déterminant que l'impression du travail d'impression est autorisée, en tant qu'information concernant l'authentification.

7. Procédé pour effectuer un processus d'impression, comportant les étapes suivantes :
effectuer un processus d'authentification pour déterminer si l'impression d'un travail d'impression par une imprimante (1, 2,3) est autorisée ;
**caractérisé par** :
le processus d'authentification est basé sur une information ayant trait à un utilisateur entrée par un utilisateur ;
exécuter l'impression du travail d'impression lorsqu'une authentification est obtenue, l'impression du travail d'impression étant déterminée comme étant autorisée;
joindre une information concernant l'authentification au travail d'impression en tant que données de faible arrière-plan comprenant un motif de contrôle de copie qui apparaît sur la copie d'un document dans lequel le motif de contrôle de copie est généré en combinant un motif de sauvegarde de copie et un motif de
suppression de copie,
dans lequel l'information concernant l'authentification jointe au travail d'impression comprend l'information ayant trait à l'utilisateur entrée par l'utilisateur,
dans lequel le motif de sauvegarde de copie peut être lu optiquement au moment de la copie du document, et
dans lequel le motif de suppression de copie ne peut pas être lu optiquement au moment de la copie du document ;
mémoriser l'information ayant trait à l'utilisateur prédéterminé ; et
déterminer si oui ou non l'information ayant trait à l'utilisateur récupérée à partir du travail d'impression est mémorisée dans l'imprimante (1, 2,3) ;
dans lequel, lorsque l'information ayant trait à l'utilisateur récupérée à partir du travail d'impression est mémorisée dans la mémoire (103), le travail d'impression est exécuté et, lorsque l'information ayant trait à l'utilisateur récupérée à partir du travail d'impression n'est pas mémorisée dans la mémoire (103), le travail d'impression est annulé.

8. Procédé selon la revendication 7, dans lequel
l'exécution comprend la détermination que l'impression du travail d'impression est autorisée lorsqu'une information identique à une information préenregistrée est entrée, et
l'adjonction comprend l'utilisation de l'information grâce à laquelle l'authentification est obtenue, l'impression du travail d'impression étant déterminée comme étant autorisée, en tant qu'information concernant l'authentification.

9. Procédé selon la revendication 8, dans lequel
l'information préenregistrée comprend un nom d'utilisateur et un mot de passe, et
l'adjonction comprend l'utilisation d'un nom d'utilisateur grâce auquel l'authentification est obtenue, l'impression du travail d'impression étant déterminée comme étant autorisée, en tant qu'information concernant l'authentification.

10. Support d'enregistrement pouvant être lu par un ordinateur qui mémorise un programme informatique pour effectuer un processus d'impression, dans lequel le programme informatique amène un ordinateur à exécuter toutes les étapes selon l'une quelconque des revendications 7 à 9, dans lequel l'impression du travail d'impression est exécutée par une unité de traitement d'impression (115) reliée à l'ordinateur.
